# EUROPÄISCHE PATENTANMELDUNG

(11) **EP 2 319 745 A2**
(43) Veröffentlichungstag der Anmeldung: **11.05.2011**
(21) Anmeldenummer: 10190456.3
(22) Anmeldetag: 09.11.2010
(51) Int. Cl.: B62B 3/04

(54) **Trailerzugwagen**

(30) Priorität: 09.11.2009 DE 202009013688 U
(71) Anmelder: LR Intralogistik GmbH, 84079 Bruckberg (DE)
(72) Erfinder: Berghammer, Fritz, 84079 Bruckberg (DE)
(74) Vertreter: Gustorf, Gerhard

(57) **Zusammenfassung**

Trailerzugwagen für werksinterne Routenzüge mit einem fahrbaren Tragrahmen (10) zur Aufnahme von Lasten (22), die beidseitig durch jeweils eine Ladeöffnung (46) des portalartigen Tragrahmens (10) ein- und ausschiebbar sind. Jeder Ladeöffnung (46) des am Boden auf Füßen (24) abstützbaren Tragrahmens (10) ist ein um eine waagrechte Achse (30) schwenkbarer Schließbügel (32) zugeordnet, der in seinem mittleren Bereich eine Fahrwerksrolle (34) trägt.

## Beschreibung

### Beschreibung

Die Erfindung betrifft einen Trailerzugwagen für werksinterne Routenzüge mit einem fahrbaren Tragrahmen zur Aufnahme von Lasten, die beidseitig durch jeweils eine Ladeöffnung des portalartigen Tragrahmens ein- und ausschiebbar sind.

Ein derartige Trailerzugwagen ist beispielsweise aus DE 10 2004 018 910 bekannt. Der brücken- oder portalartige Tragrahmen übergreift dabei in Fahrzeuglängsrichtung einen Transportbereich und verbindet gleichzeitig ein vorderes Fahrwerk mit einem hinteren Fahrwerk, die beide lenkbar sind. Um das Ein- und Ausschieben von Lasten, beispielsweise Kleinladungsträger, Gitterboxen oder Trolleys zu erleichtern, sind am Tragrahmen im Querschnitt L-förmige Hubbleche vorgesehen, die über ein Kolben-Zylinder-Aggregat nach unten verstellt werden können; für den Fahrbetrieb werden die Hubbleche angehoben.

Der Erfindung liegt die Aufgabe zugrunde, einen Trailerzugwagen der eingangs umrissenen Bauart zur Verfügung zu stellen, dessen Tragrahmen ohne aufwändige Fahrwerke und Hubaggregate auskommt.

Zur Lösung dieser Aufgabe ist erfindungsgemäß vorgesehen, dass jeder Ladeöffnung des am Boden auf Füßen abstützbaren Tragrahmens ein um eine waagrechte Achse schwenkbarer Schließbügel zugeordnet ist, der in seinem mittleren Bereich eine Fahrwerksrolle trägt.

Nach einem weiteren Merkmal der Erfindung stützt sich der Tragrahmen in aus der Ladeöffnung nach oben ausgeschwenkter Öffnungsstellung des Schließbügels auf den Füßen ab, während er sich in dessen nach unten geschwenkter Schließstellung nur auf den Fahrwerksrollen abstützt.

Die Erfindung hat gegenüber dem Stand der Technik den erheblichen Vorteil, dass die bisher erforderlichen und lenkbaren Fahrwerke im vorderen und hinteren Bereich des Trailerzugwagens durch zwei Fahrwerksrollen ersetzt sind, die jeweils im mittleren Bereich der beiden Schließbügel angebracht sind. In der Stellung zum Laden und Beladen des Trailerzugwagens stützt sich der Tragrahmen auf vier Füßen ab, wobei die Ladeöffnung frei ist, um von einer der beiden Seiten des Trailerzugwagens die Last ein- bzw. auszuschieben. Anschließend wird der Schließbügel in seine Schließstellung abgesenkt, so dass sich nun die beiden Fahrwerksrollen auf dem Boden abstützen, während die Füße und damit der gesamte Tragrahmen angehoben werden.

In Weiterbildung der Erfindung ist am Tragrahmen zum Verriegeln des Schließbügels in seiner nach unten geschwenkten Schließstellung eine Sperrklinke angeordnet, die nach dem Überfahren durch das freie Ende des Schließbügels in ihre Raststellung federnd einschnappt. Dabei ist es von Vorteil, wenn die Sperrklinke in der eingeschnappten Raststellung in senkrechter Richtung nach unten verstellt werden kann. Um die Sperrklinke niederzudrücken, ist dieser ein am Tragrahmen angebrachtes, hydraulisches oder pneumatisches Stellelement zugeordnet, das in Weiterbildung der Erfindung über einen Impulsgeber gesteuert werden kann, der in dem Trailerzugfahrzeug angeordnet ist. Der Impulsgeber kann dabei durch das Körpergewicht einer Bedienungsperson gesteuert werden, welche das Zugfahrzeug betritt (System der Fahrererkennung).

Die Erfindung ist nachstehend an zwei Ausführungsbeispielen erläutert, die in der Zeichnung dargestellt sind. Es zeigen:
Figur 1 die perspektivische Ansicht eines Trailerzugwagens gemäß der Erfindung,
Figur 2 eine Seitenansicht des Trailerzugwagens der Figur 1,
Figur 3 eine Draufsicht auf den Trailerzugwagen,

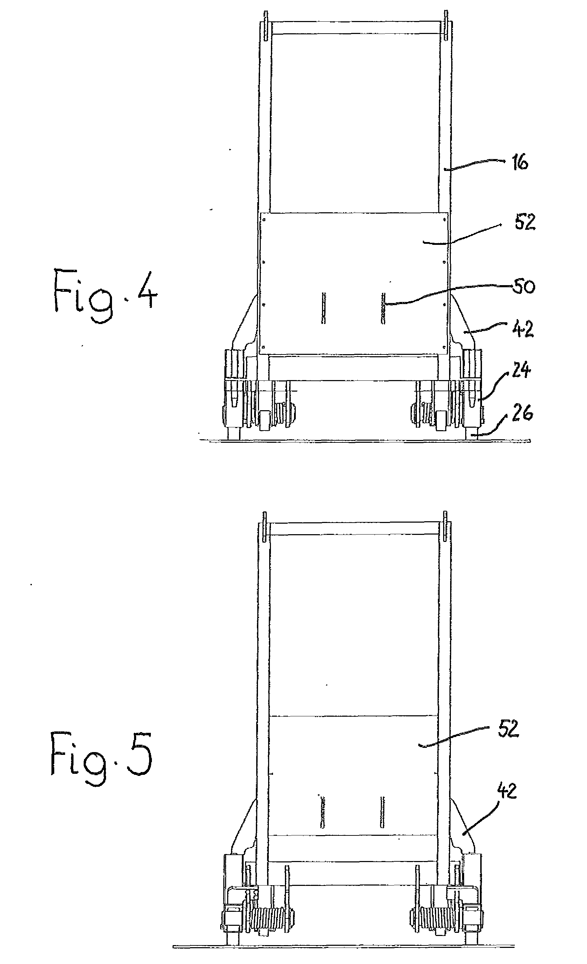

Figur 4 eine Ansicht des Trailerzugwagens in Richtung des Pfeiles IV der Figur 2,
Figur 5 eine Ansicht des Trailerzugwagens in Richtung des Pfeiles V der Figur 2,
Figur 6 eine der Figur 2 entsprechende, schematische Seitenansicht des Trailerzugwagens in der Schließstellung des Schließbügels,
Figur 7 die Seitenansicht des Trailerzugwagens während der Öffnungsbewegung des Schließbügels,
Figur 8 den vollständig geöffneten Trailerzugwagen in Öffnungsstellung des Schließbügels.
Figur 9 eine Weiterentwicklung des mit einem Stützradpaar ausgestatteten Trailerzugwagens in Öffnungsstellung eines der beiden Schließbügel,
Figur 10 den Trailerzugwagen der Figur 9 in Schließstellung der beiden Schließbügel,
Figur 11 die Stirnansicht des Trailerzugwagens mit angehobenem Stützradpaar gemäß Figur 10 und
Figur 12 eine der Figur 11 entsprechende Ansicht mit abgesenktem Stützradpaar.

Der Trailerzugwagen gemäß der Erfindung hat einen portalartigen Tragrahmen 10 mit zwei seitlichen Rahmen 12 in Form eines kopfstehenden U, die an ihren oberen Enden durch zwei Querstreben 14 miteinander verbunden sind. Jeder Rahmen 12 besteht aus zwei vertikalen Pfosten 16, die an ihren oberen Enden durch eine Längsstrebe 18 miteinander verbunden sind. Parallel zu den beiden Querstreben 14 sind an den unteren Enden der Pfosten 16 zwei winkelförmige Tragschienen 20 befestigt, die zur Aufnahme einer schematisch dargestellten Last 22 dienen.

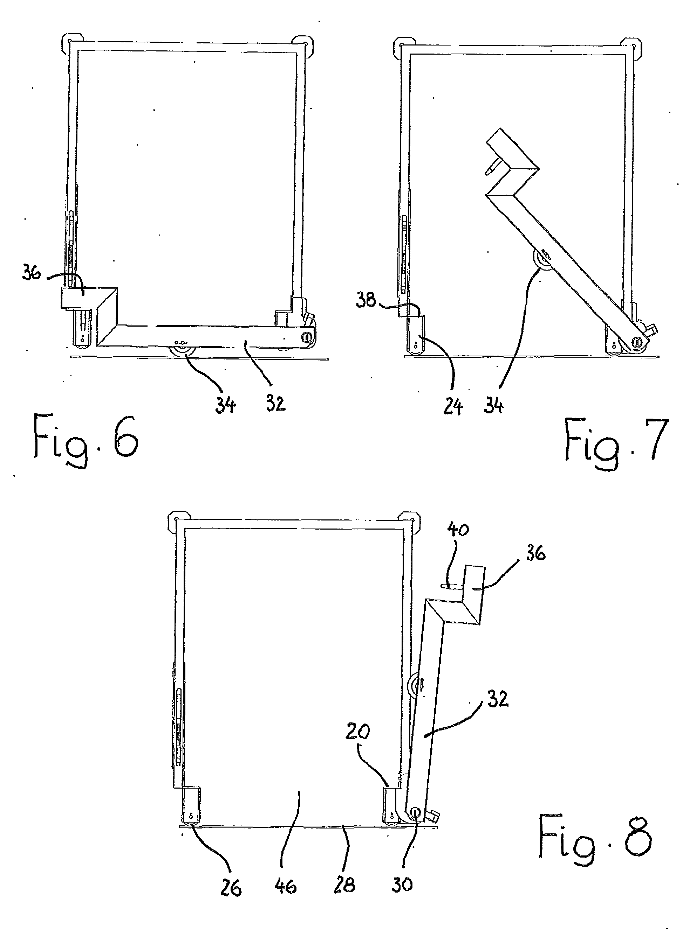

An den vier Ecken des Tragrahmens 10 ist jeweils ein vertikaler Fuß 24 angebracht, der sich über eine Rolle 26 verschiebbar auf dem Boden 28 abstützt, wenn sich der Trailerzugwagen in der in Figur 8 gezeigten, geöffneten Stellung befindet.

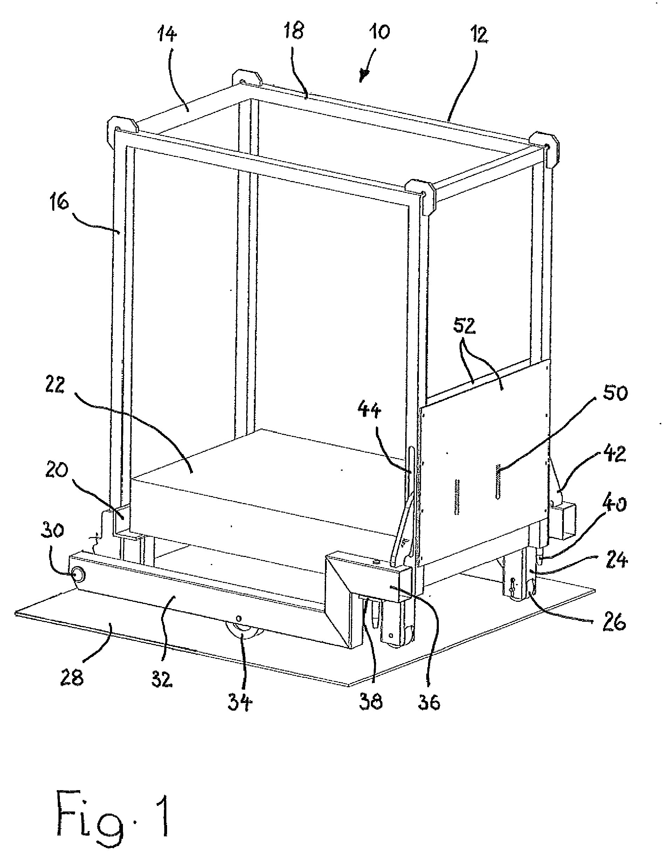

Im unteren Bereich jedes der beiden seitlichen Rahmen 12 ist eine quer zur Fahrtrichtung und damit parallel zu der entsprechenden Querstrebe 14 und Tragschiene 20 eine Achse 30 angebracht, an der ein Schließbügel 32 schwenkbar angelenkt ist. Im mittleren Bereich trägt der Schließbügel 32 eine drehbar gelagerte Fahrwerksrolle 34. Am der Achse 30 gegenüberliegenden Ende ist der Schließbügel 32 derart nach oben abgewinkelt, dass sein freies Ende 36 in der Schließstellung der Figuren 1, 2 und 6 auf einem Anschlag 38 aufliegt, der von dem entsprechenden Fuß 24 nach außen absteht. In dieser Schließstellung greift ein Positionierbolzen 40, der von dem freien Ende 36 nach unten absteht, in eine nicht weiter dargestellte Zentrieröffnung des Anschlags 38 ein.

Dem freien Ende 36 jedes Schließbügels 34 ist eine von einer nicht dargestellten Feder belastete Sperrklinke 42 zugeordnet, die aus einem Langloch 44 des zugeordneten Pfostens 16 seitlich herausragt. Beim Herunterschwenken des Schließbügels 32 um seine Achse 30 (vgl. Figur 7) in die in den Figuren 1 und 6 gezeigte Schließstellung überfährt das freie Ende 36 des Schließbügels 32 die Sperrklinke 42 und drückt diese dabei gegen die Kraft der erwähnten Feder in das Langloch 34 hinein. Sobald das freie Ende 36 gegen den Anschlag 38 stößt, drückt die Feder die Sperrklinke 42 in ihre Raststellung der Figuren 1 und 6.

In der in den Figuren 1 und 6 gezeigten Schließstellung sichert das freie Ende 36 des Schließbügels 32 die auf die beiden Tragschienen 20 geschobene Last 22. Figur 8 zeigt die Belade- bzw. Entladestellung des Trailerzugwagens gemäß der Erfindung, in der der Schließbügel 32 um seine Achse 30 in die nach oben ragende Öffnungsstellung geschwenkt ist. Auf diese Weise ist die zugeordnete Ladeöffnung 46 des Tragrahmens 10 frei, so dass Lasten, beispielsweise eine fahrbare Gitterbox, von der Seite her durch die Ladeöffnung 46 auf die beiden Tragschienen 20 aufgeschoben werden kann. In dieser Belade- und Entladestellung stützt sich der Tragrahmen 10 mit seinen Füßen 24 über die Rollen 26 auf dem Boden 28 ab.

Anschließend wird, wie Figur 7 zeigt, der Schließbügel 32 um die Achse 30 nach unten geschwenkt, bis sich dessen Fahrwerksrolle 34 ebenfalls auf dem Boden 28 abstützt. Wenn der Schließbügel 32 über eine am freien Ende 36 angreifende Kraft weiter herabgedrückt wird, werden die beiden Füße 24 im Bereich der Achse 30 vom Boden 28 abgehoben, so dass der gesamte Tragrahmen 10 zunächst eine geneigte Lage einnimmt. Bei weiterem Herabdrücken des Schließbügels 32, was von Hand durchgeführt und durch eine der Gewichtskraft entgegenwirkende Feder 48 unterstützt wird, kommt das freie Ende 36 zur Anlage an dem Anschlag 38, wobei alle vier Füße 24 angehoben werden, so dass nur noch die beiden Fahrwerksrollen 34 Kontakt mit dem Boden 28 haben. In dieser Stellung wird der Schließbügel 32 durch die Sperrklinke 42, die in ihre Raststellung federnd eingeschnappt ist, gehalten.

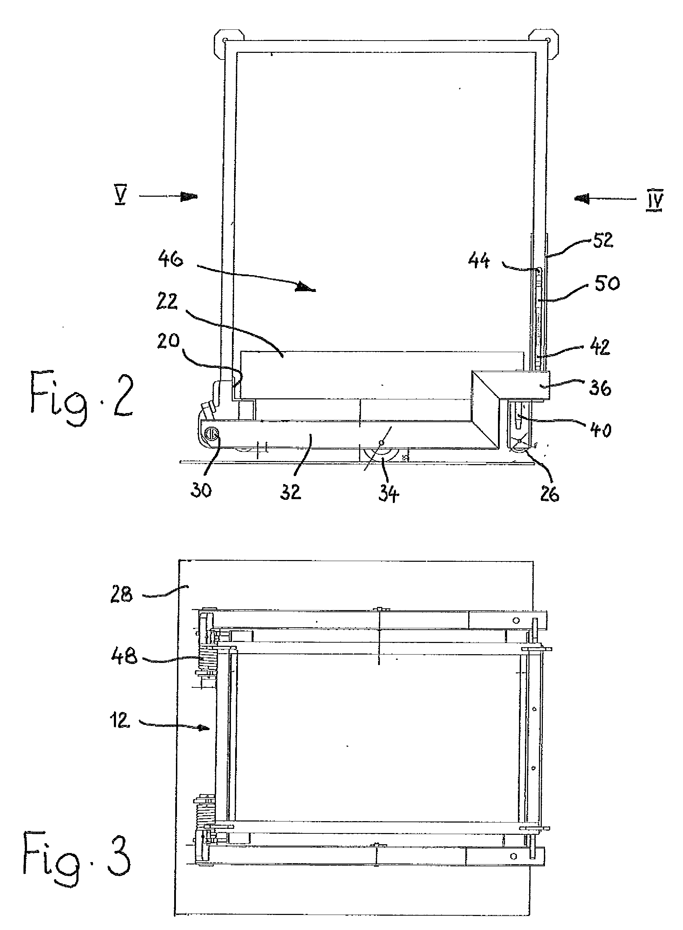

Jeder Sperrklinke 42 ist ein hydraulisches Stellelement 50 zugeordnet, das in den Figuren 2 sowie 6 bis 8 zu erkennen ist und zwischen zwei Gehäusewänden 52 untergebracht ist, die an den entsprechenden Pfosten 16 des Rahmens 12 befestigt sind. Die hydraulischen Stellelemente 50 - alternativ können diese auch pneumatisch betrieben werden - sind mit einem Impulsgeber verbunden, der in einem nicht gezeigten Trailerzugfahrzeug untergebracht ist.

Wenn sich der Schließbügel 32 in der erläuterten Raststellung befindet, in der er die Sperrklinke 42 überfahren hat, ist die Last 22 innerhalb des Tragrahmens 10 gegen Herausfallen gesichert, da sie, wie Figur 1 zeigt, von dem nach oben abgewinkelten Ende 36 des Schließbügels 32 zur Seite hin gehalten wird.

In dieser Anfangsstellung, in der sich der Tragrahmen 10 über die beiden Fahrwerksrollen 34 und die Rollen 26 der beiden Füße 24, die sich im Bereich der Achsen 30 befinden, auf dem Boden 28 abstützt, nimmt der Schließbügel 32 zunächst eine Schräglage gegenüber dem Boden 28 ein. Wenn dann die beiden hydraulischen Stellelemente 50 die damit verbundenen Sperrklinken 42 nach unten drücken, wird auch die diesen gegenüberliegende Seite im Bereich der Achsen 30 des Tragrahmens 10 angehoben, so dass sich dieser nur noch über die beiden mittleren Fahrwerksrollen 34 auf dem Boden 28 abstützt. Diese Stellung ist in den Figuren 1, 2 und 6 dargestellt.

Die beiden Stellelemente 50 sind, wie erwähnt, mit einem Impulsgeber im Trailerzugfahrzeug verbunden, der vom Fahrer des Zugfahrzeugs gesteuert werden kann. Diese Steuerung erfolgt in vorteilhafter Weise durch das Körpergewicht des Fahrers, sobald dieser das Zugfahrzeug betritt (Fahrererkennung). Damit erhalten die Stellelemente 50 aller Tragrahmen der angehängten Trailerzugwagen den Befehl, die entsprechenden Sperrklinken 42 nach unten zu drücken, so dass sie in die in den Figuren 1, 2 und 6 gezeigte Transportstellung kommen, in der nur die Fahrwerksrollen 34 am Boden 28 abgestützt sind.

Sobald der Routenzug an einer Be- oder Entladestation angekommen ist und der Fahrer aus dem Zugfahrzeug aussteigt, werden die Stellelemente 50 wieder entlastet, so dass die Sperrklinken 42 in ihre obere Freigabestellung gelangen und die jeweils gewünschte Sperrklinke 42 von Hand in das zugeordnete Langloch 44 hineingedrückt werden kann, damit der Schließbügel 32 um seine Achse 30 in die Öffnungsstellung geschwenkt werden (Figuren 7 und 8).

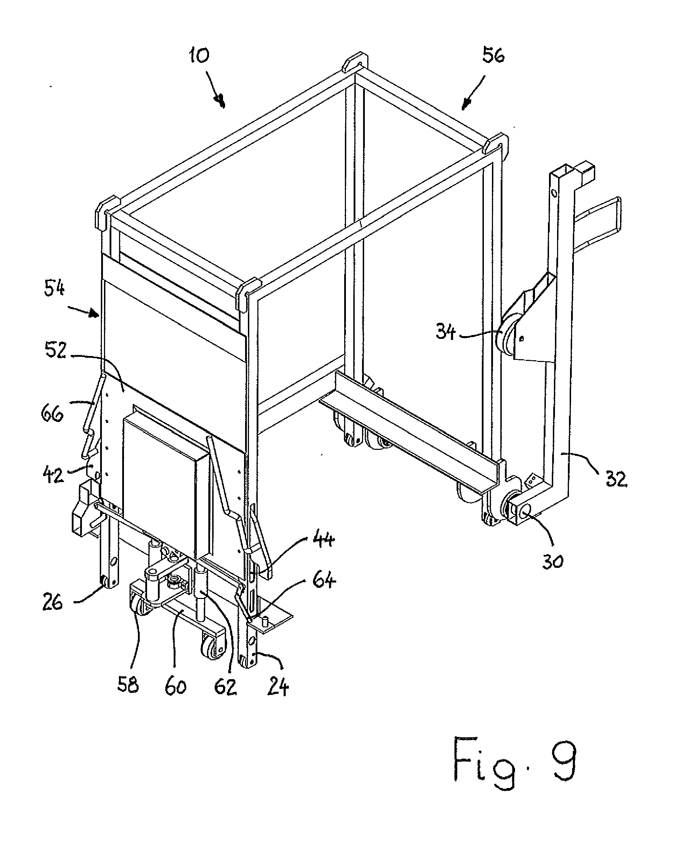

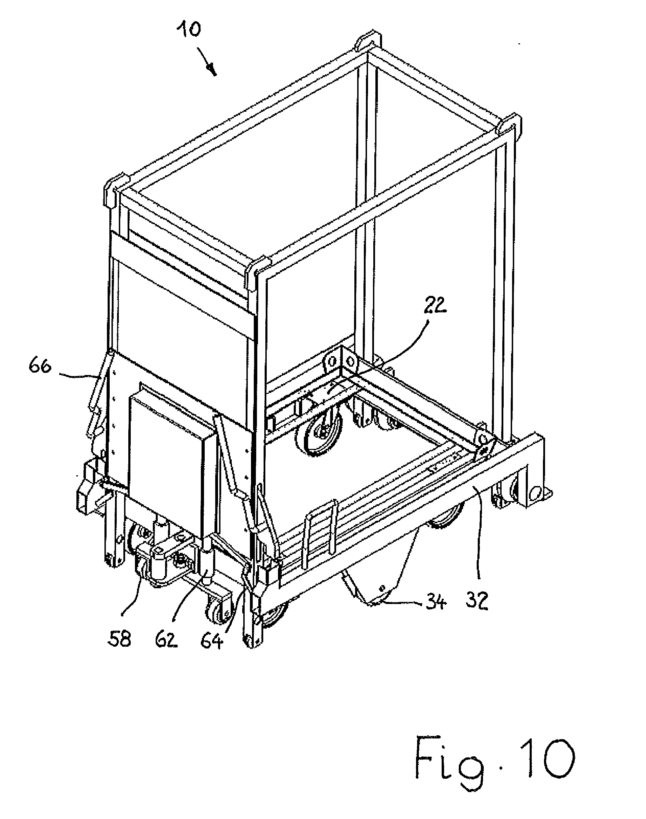

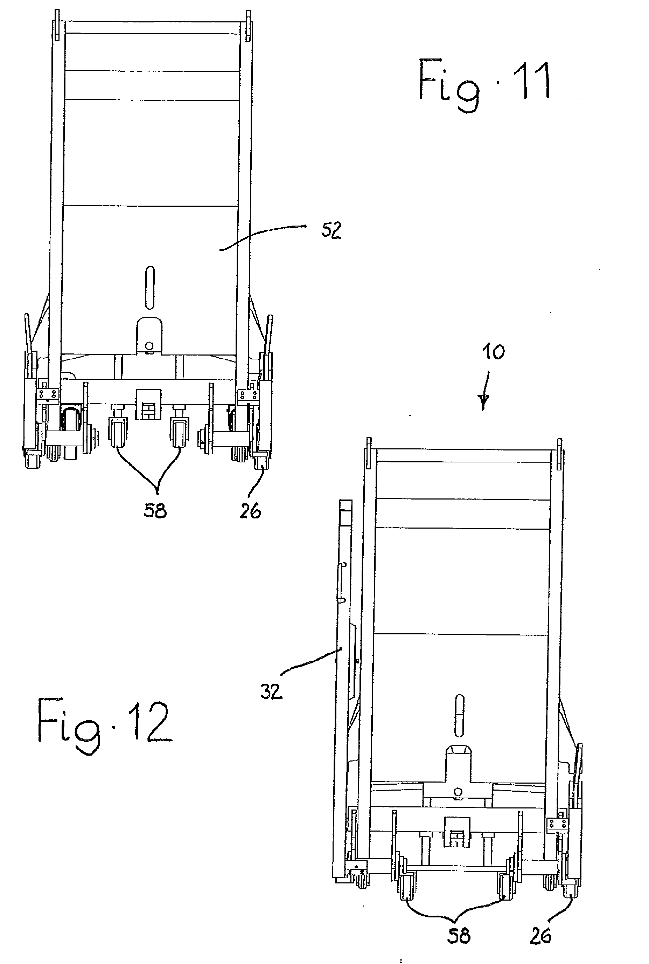

Die Figuren 9 bis 12 zeigen eine Weiterentwicklung, bei der der Tragrahmen 10 an seiner Vorderseite 54, die die Gehäusewand 52 trägt und der Rückseite 56 mit den beiden Achsen 30 für die Schließbügel 32 gegenüberliegt, mit einem Stützradpaar 58 ausgerüstet ist. Die beiden Stützräder 58 sind an einer Traverse 60 gelagert, die über zwei Hydraulikzylinder 62 und einen nicht weiter dargestellten Stellmechanismus vertikal verfahrbar sind, und zwar aus einer angehobenen Bereitschaftsstellung (vgl. Figuren 10 und 11) in eine abgesenkte Fahrstellung, die in den Figuren 9 und 12 dargestellt ist. Zur Betätigung des Stellmechanismus dienen zwei Fühler 64, die erkennen, ob sich der zugeordnete Schließbügel 32 in der geöffneten Stellung der Figur 9 oder in der geschlossenen Stellung der Figur 10 befindet.

In der Öffnungstellung des Schließbügels 32 gemäß Figur 9 befindet sich der Fühler 64 in seiner ausgeschwenkten Stellung, in der er dem Stellmechanismus den Befehl gibt, die beiden Hydraulikzylinder 62 und damit das Stützradpaar 58 nach unten auszufahren, wenn gemäß der oben erwähnten Fahrererkennung der Fahrer das Zugfahrzeug betritt. Damit wird verhindert, dass der Trailerzugwagen bei versehentlich geöffnetem Schließbügel 32 um die Fahrwerksrolle 34 des geschlossenen Schließbügels 32 kippt und auf der geöffneten Seite auf den kleinen Rollen 26 der Füße 24 abrollt.

Die Figuren 9 und 10 zeigen, dass an den beiden Sperrklinken 42 ein Handhebel 66 angebracht ist, mit dessen Hilfe die Sperrklinken 42 in das zugeordnete Langloch 44 geschwenkt werden können, um den Schließbügel 32 in seine Öffnungsstellung schwenken zu können.

## Patentansprüche

1. Trailerzugwagen für werksinterne Routenzüge mit einem fahrbaren Tragrahmen (10) zur Aufnahme von Lasten (22), die beidseitig durch jeweils eine Ladeöffnung (46) des portalartigen Tragrahmens (10) ein- und ausschiebbar sind, **dadurch gekennzeichnet, dass** jeder Ladeöffnung (46) des am Boden auf Füßen (24) abstützbaren Tragrahmens (10) ein um eine waagrechte Achse (30) schwenkbarer Schließbügel (32) zugeordnet ist, der in seinem mittleren Bereich eine Fahrwerksrolle (34) trägt.

2. Trailerzugwagen nach Anspruch 1, **dadurch gekennzeichnet, dass** sich der Tragrahmen (10) im aus der Ladeöffnung (46) nach oben ausgeschwenkter Öffnungsstellung des Schließbügels (32) auf den Füßen (24) abstützt, während er sich in dessen nach unten geschwenkter Schließstellung nur auf den Fahrwerksrollen (34) abstützt.

3. Trailerzugwagen nach Anspruch 1 oder 2, **dadurch gekennzeichnet, dass** am Tragrahmen (10) zum Verriegeln des Schließbügels (32) in seiner nach unten geschwenkter Schließstellung eine Sperrklinke (42) angeordnet ist, die nach dem Überfahren durch das freie Ende (36) des Schließbügels (32) in ihre Raststellung federnd einschnappt.

4. Trailerzugwagen nach Anspruch 3, **dadurch gekennzeichnet, dass** die Sperrklinke (42) in der eingeschnappten Raststellung in senkrechter Richtung nach unten verstellbar ist.

5. Trailerzugwagen nach Anspruch 4, **dadurch gekennzeichnet, dass** der Sperrklinke (42) zum Niederdrücken ein am Tragrahmen (10) angebrachtes, hydraulisches oder pneumatisches Stellelement (50) zugeordnet ist.

6. Trailerzugwagen nach Anspruch 5, **dadurch gekennzeichnet, dass** das Stellelement (50) über einen Impulsgeber steuerbar ist, der in einem Trailerzugfahrzeug angeordnet ist.

7. Trailerzugwagen nach Anspruch 6, **dadurch gekennzeichnet, dass** der Impulsgeber durch das Körpergewicht eines das Zugfahrzeug betretenden Fahrers steuerbar ist.

8. Trailerzugwagen nach einem der vorhergehenden Ansprüche, **dadurch gekennzeichnet, dass** am Schließbügel (32) im Bereich der waagrechten Schwenkachse (30) eine dessen Gewichtskraft entgegenwirkende Feder (48) angreift.

9. Trailerzugwagen nach einem der vorhergehenden Ansprüche, **dadurch gekennzeichnet, dass** die Füße (24) des Tragrahmens (10) mit Rollen (26) bestückt sind.

10. Trailerzugwagen nach einem der Ansprüche 2 bis 9, **dadurch gekennzeichnet, dass** der Tragrahmen (10) mit einem Stützradpaar (58) ausgerüstet ist, das bei nach oben ausgeschwenkter Öffnungsstellung wenigstens eines der Schließbügel (32) über einen Stellmechanismus aus einer angehobenen Bereitschaftsstellung in eine vertikal abgesenkte Fahrstellung verschiebbar ist.

11. Trailerzugwagen nach Anspruch 10, **dadurch gekennzeichnet, dass** der Stellmechanismus an der Vorderseite (54) des Tragrahmens (10) angeordnet ist, die der die Achse (30) der Schließbügel (32) tragenden Rückseite (56) gegenüberliegt.

12. Trailerzugwagen nach Anspruch 10 oder 11, **dadurch gekennzeichnet, dass** der Stellmechanismus mit einen Fühler (64) zum Erkennen der Öffnungsstellung des zugeordneten Schließbügels (32) verbunden ist.

13. Trailerzugwagen nach Anspruch 12, **dadurch gekennzeichnet, dass** der Stellmechanismus aus einem Hydraulikantrieb (62) besteht, der bei Betreten des Zugfahrzeugs über eine Fahrererkennung aktivierbar ist.
